# EUROPÄISCHE PATENTSCHRIFT

(11) **EP 1 253 332 B1**
(45) Veröffentlichungstag und Bekanntmachung des Hinweises auf die Patenterteilung: **24.05.2006**
(21) Anmeldenummer: 02405274.8
(22) Anmeldetag: 08.04.2002
(51) Int. Cl.: F16B 15/00, F16B 19/14

(54) **Nagelförmiges Befestigungselement**
Nail-type fastener
Elément de fixation en forme de clou

(30) Priorität: 23.04.2001 DE 10119799
(43) Veröffentlichungstag der Anmeldung: 30.10.2002
(73) Patentinhaber: HILTI Aktiengesellschaft, 9494 Schaan (LI)
(72) Erfinder: Gassmann, Horst-Detlef, 9491 Ruggell (LI); Hachtel, Hans, 9494 Schaan (LI); Esser, Jens-Jörg, 6845 Hohenems (AT); Laternser, Ralf, 53797 Lohmar (DE)
(74) Vertreter: Wildi, Roland

(56) Entgegenhaltungen:
- EP-A- 0 926 361
- CH-A- 310 310
- DE-B- 1 019 869

## Beschreibung

Die Erfindung betrifft ein nagelförmiges Befestigungselement gemäss dem Oberbegriff des Patentanspruchs 1.

Bei der Befestigung von Bauteilen an einem harten Untergrund wie Stahl, Beton oder Gestein werden nagelförmige Befestigungselemente verwendet, die mit Hilfe eines pulverkraftbetriebenen Setzgerätes in den Untergrund getrieben werden. Ein derartiges Befestigungselement ist bereits aus der DE-1 575 152 bekannt. Ein Schaft dieses Befestigungselementes verjüngt sich an einem ersten Ende zu einer Spitze. An einem, dem ersten Ende gegenüberliegenden, zweiten Ende steht der Schaft mit einem Kopf in Verbindung, dessen Aussenkontur mit einem Gewinde versehen ist. Ausgehend von der Spitze weist der Schaft zwei hintereinander angeordnete Abschnitte auf. Ein erster, von der Spitze ausgehender Abschnitt ist ballig ausgebildet und erweitert sich in Richtung Kopf. Der zweite Abschnitt ist konisch ausgebildet und erweitert sich ebenfalls in Richtung Kopf. Ein grösster Durchmesser des ersten Abschnittes entspricht einem kleinsten Durchmesser des zweiten Abschnittes. Ein Steigungswinkel des zweiten Abschnittes beträgt 3°. Die parallel zur Längserstreckung des Befestigungselementes betrachtete Länge des konischen zweiten Abschnittes weist eine grosse Länge auf. Zum Eintreiben dieses bekannten Befestigungselementes wird eine sehr hohe Eintreibenergie benötigt, da insbesondere mit dem zweiten Abschnitt sehr viel Untergrundmaterial seitlich verdrängt wird.

Aus der DE 1 019 869 B ist ein Schiessbolzen mit einer ogivalen Spitze und einer sich an die Spitze anschliessenden, Rillen aufweisenden Verdickungswulst bekannt. Die Verdickungswulst weist dabei die Form eines sich nach der Spitze hin erweiternden Kegelstumpfes auf. An die Verdickungswulst schliesst sich an deren, der Spitze abgewandtem Ende noch ein Schaftteil mit zunehmendem Durchmesser und ein nicht eintreibbarer Kopf an.

Der Erfindung liegt die Aufgabe zugrunde, ein nagelförmiges Befestigungselement zu schaffen, das wirtschaftlich herstellbar ist, eine kurze Baulänge aufweist und bei annähernd gleicher Haltekraft mit wenig Eintreibenergie in den Untergrund eintreibbar ist.

Die Lösung dieser Aufgaben erfolgt mit einem nagelförmigen Befestigungselement, welches die im kennzeichnenden Abschnitt des Patentanspruchs 1 angeführten Merkmale aufweist.

Aufgrund dessen, dass sich der zweite Abschnitt vom ersten Abschnitt bis zum Kopf erstrekt und er sich zum ersten Abschnitt hin verjüngt sowie aufgrund der kürzeren Länge des zweiten Abschnittes wird beim Eintreibvorgang des erfindungsgemässen Befestigungselementes weniger Untergrundmaterial verdrängt. Deshalb wird auch zum Eintreiben des Befestigungselementes wenig Eintreibenergie benötigt.

Insbesondere von der Materialfestigkeit des Untergrundes hängt die Länge des zweiten Abschnittes ab. Zweckmässigerweise beträgt die Länge des zweiten Abschnittes der 0,16- bis 0,95-fachen Länge des ersten Abschnittes und der 0,17- bis 0,95-fachen Länge des Kopfes. Befestigungselemente die beispielsweise in sehr harte Untergründe eingetrieben werden haben erfahrungsgemäss einen kurzen zweiten Abschnitt. Bei etwas weicheren Untergründen kann die Länge des zweiten Abschnitt grösser ausgebildet sein.

Insbesondere bei der Befestigung von Bauteilen, die unter Vorspannung auf dem Untergrund aufliegen müssen, haben sich Befestigungselemente bewährt, deren Kopf sich aus einem konischen Bereich und einer den konischen Bereich radial überragenden, flanschartigen Erweiterung zusammensetzt. Der sich an den zweiten Abschnitt anschliessende konische Bereich erweitert sich unter einem Steigungswinkel - beispielsweise 7° bis 9°-, der grösser ist als der Steigungswinkel im zweiten Abschnitt. Beim Eintreiben eines Befestigungselementes in den Untergrund findet eine zunehmende Verklemmung des zum Kopf gehörenden konischen Bereiches in einer Bohrung des Bauteiles statt und zieht dieses gegen die Oberfläche des Untergrundes.

Ein gutes Eintreibverhalten des Befestigungselementes und eine grossflächige Abstützung des Befestigungselementes an der Oberfläche eines festzulegenden Bauteiles wird zweckmässigerweise mit einem Kopf erreicht, der sich aus einem zylindrischen Bereich und einer flanschartigen Erweiterung zusammensetzt, wobei sich der zylindrischen Bereich an den zweiten Abschnitt des Schaftes anschliesst und die flanschartige Erweiterung den zylindrischen Bereich radial überragt.

Der lösbaren Befestigung von Bauteilen an einem Untergrund dient vorzugsweise ein nagelförmiges Befestigungselement, dessen Kopf von einem zylindrischen Bereich gebildet ist, der den zweiten Abschnitt radial überragt und an seiner Aussenkontur mit einem Gewinde versehen ist.

Um im Bereich des Schaftes eine bessere Kraftübertragung zwischen dem Untergrund und dem Befestigungselement sowie eine gute Klemmung des Befestigungselementes in dem Untergrund erreichen zu können, weist vorteilhafterweise der zweite Abschnitt einen Steigungswinkel von 2° bis 3,5° auf.

Damit beim Eintreiben des Befestigungselementes in den Untergrund weniger Grundmaterial verdrängt werden muss und die Eintreibenergie reduziert werden kann, verjüngt sich vorzugsweise der an den zweiten Abschnitt angrenzende erste Abschnitt unter einem Radius von 20 mm bis 35 mm zur Spitze hin.

Eine Erhöhung der Auszugslasten eingetriebener Befestigungselemente wird vorteilhafterweise mit einer Oberflächenprofilierung erreicht, die wenigstens in einem der beiden Abschnitte wenigstens teilweise angeordnet ist. Besonder hohe Auszugslasten bei geringer Setztiefe werden erreicht, wenn beispielsweise der erste Abschnitt wenigstens teilweise mit einer Oberflächenprofilierung versehen ist. Die Randriegung bewirkt eine Verbesserung des Formschlusses zwischen dem Befestigungselement und dem Untergrund. Ist die Oberflächenprofilierung beispielsweise im ersten Abschnitt angeordnet, so erstreckt sich diese beispielsweise über den gesamten ersten Abschnitt und endet im wesentlichen in der Spitze des Schaftes. Bei der Oberflächenprofilierung handelt es sich beispielsweise um eine Randrierung, deren Tiefe beispielsweise im Übergangsbereich zwischen dem ersten und dem zweiten Abschnitt bis zu 0,4 mm und im Bereich des Spitze bis zu 0,15 mm aufweist. Die Oberflächenprofilierung kann aber auch nur im zweiten Abschnitt oder im ersten und im zweiten Abschnitt angeordnet sein.

Ein grösster Durchmesser des ersten Abschnittes entspricht dem kleinsten Durchmesser des zweiten Abschnittes und der grösste Durchmesser des zweiten Abschnittes entspricht dem kleinsten Durchmesser des Kopfes.

Die Erfindung wird anhand von Zeichnungen, die mehrere Ausführungsbeispiele wiedergeben, näher erläutert. Es zeigen:
- Fig.1: ein erfindungsgemässes nagelförmiges Befestigungselement, dessen Kopf eine kleine flanschartige Erweiterung aufweist;
- Fig. 2: ein weiteres Befestigungselement mit einem Kopf, dessen Aussenkontur mit einem Gewinde versehen ist;
- Fi.g 3: ein weiteres Befestigungselement mit einer grossen flanschartigen Erweiterung im Bereich des Kopfes;
- Fig. 4: ein weiteres Befestigungselement mit einer grossen flanschartigen Erweiterung im Bereich des Kopfes;

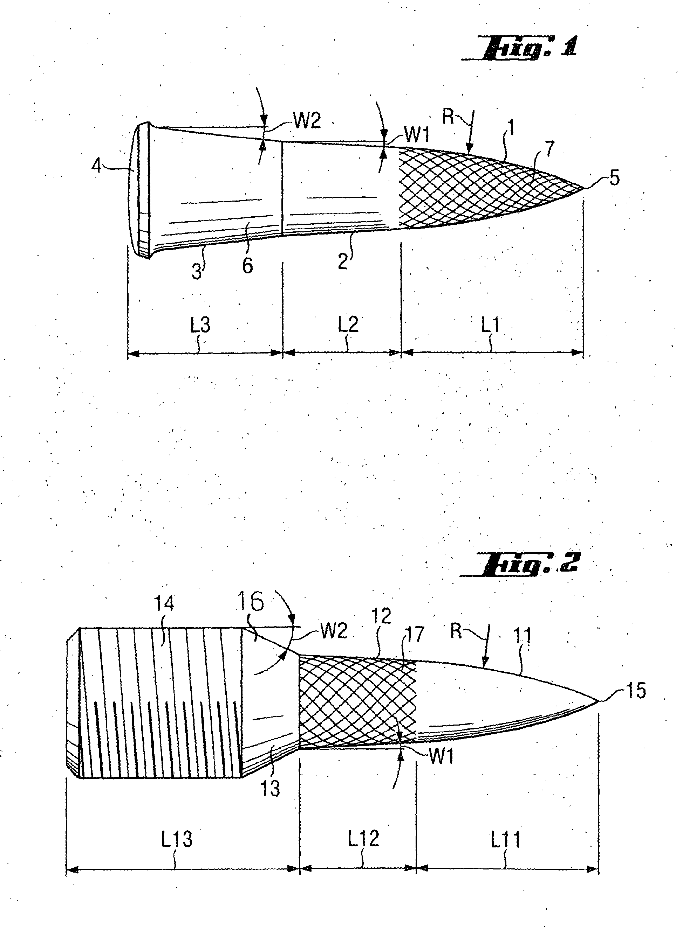

Die in den Fig. 1 bis 4 dargestellten, nagelförmigen Befestigungselemente setzen sich aus einem Schaft und einem Kopf 3, 13, 23, 33 mit der Länge L3, L13, L23, L33 zusammen, der den Schaft in radialer Richtung überragt. Der Kopf 3, 13, 23, 33 befindet sich an einem ersten Ende des Schaftes. An einem zweiten Ende, das dem ersten Ende gegenüberliegt, verjüngt sich der Schaft zu einer Spitze 5, 15, 25, 35. Ausgehend von dieser Spitze 5, 15, 25, 35 erstreckt sich in Richtung Kopf 3, 13, 23, 33 ein balliger, erster Abschnitt 1, 11, 21, 31 des Schaftes, an den sich ein konischer, zweiter Abschnitt 2, 12, 22, 32 anschliesst. Der erste Abschnitt 1 verjüngt sich unter einem kontinuierlichen Radius R von 25 mm zur Spitze 5,15, 25, 35 hin. Der zweite Abschnitt 2 ist konisch ausgebildet, wobei der senkrecht zu einer Längsachse des Befestigungselementes betrachtete Querschnitt beider Abschnitte 1, 11, 21, 31, 2, 12, 22, 32 jeweils in einer zum Kopf 3, 13, 23, 33 hin verlaufenden Richtung zunimmt. Der zweite Abschnitt 2, 12, 22, 32 weist einen Steigungswinkel W1 von 2,8° auf.

Der kleinste Durchmesser des zweiten Abschnittes 2, 12, 22, 32 ist gleich gross wie der grösste Durchmesser des ersten Abschnittes 1, 11, 21, 31 und der grösste Durchmesser des zweiten Abschnittes 2, 12, 22, 32 ist gleich gross wie der kleinste Durchmesser des Kopfes 3, 13, 23, 33. Die Länge L2, L12, L22, L32 des zweiten Abschnittes 2, 12, 22, 32 entspricht beispielsweise der 0,66-fachen Länge L1, L11, L21, L32 des ersten Abschnittes 1, 11, 21, 31.

Den Darstellungen in Fig. 1 und 4 ist entnehmbar, dass beispielsweise der erste Abschnitt 1, 31) mit einer Oberflächenprofilierung (7, 37) versehen ist. Bei dieser Oberflächenprofilierung (7, 37) kann es sich um eine Randrierung handeln, deren Tiefe beispielsweise 0,1 bis 0,3 mm beträgt.

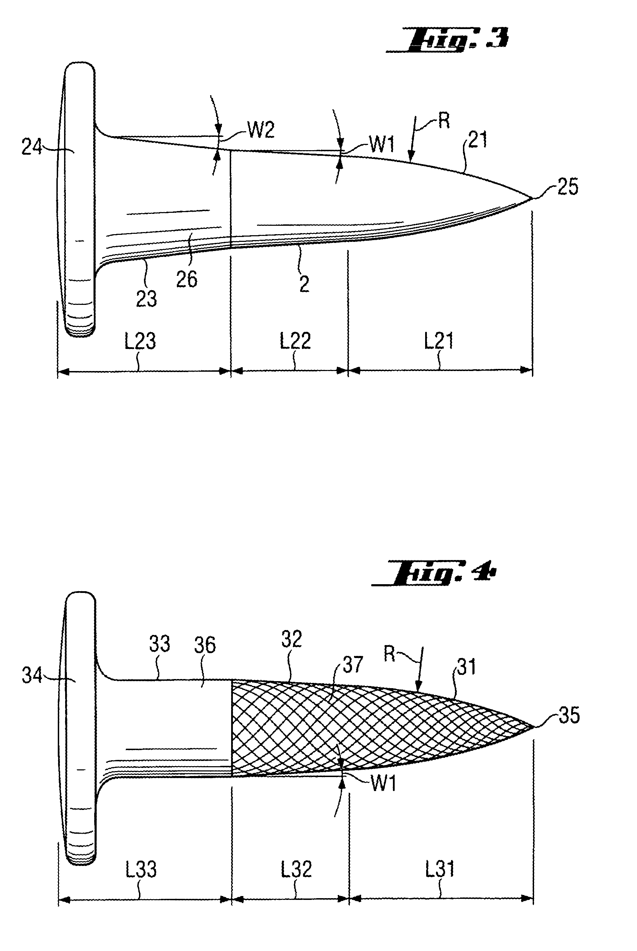

Das in den Fig. 1 und 3 dargestellte Befestigungselement weist einen Kopf 3, 23 auf, der sich aus einem konischen Bereich 6, 26 und einer flanschartigen Erweiterung 4, 24 zusammensetzt, wobei die in Fig. 1 dargestellte flanschartige Erweiterung 4 einen Aussendurchmesser aufweist, der dem 1, 05-bis 1.15-fachen grössten Durchmesser des konischen Bereiches 6 entspricht. Die in Fig. 3 dargestellte flanschartige Erweiterung 24 besitzt einen Aussendurchmesser, der dem 1,4- bis 2, 2-fachen grössten Durchmesser des konischen Bereiches 26 entspricht. Ein Steigungswinkel W2 des konischen Bereiches 6, 26 beträgt 6° bis 10° und ist somit grösser als der Steigungswinkel W1 des zweiten Abschnitts 2, 22.

Die Fig. 2 zeigt ein Befestigungselement, dessen Kopf 13 von einem zylindrischen Bereich 14, sowie von einem konischen Bereich 16 gebildet ist, der sich zwischen dem zylindrischen Bereich 14 und dem zweiten Abschnitt 12 befindet. Die Aussenkontur des zylindrischen Bereiches 14 ist mit einem Aussengewinde versehen.

In der Fig. 4 ist ein Befestigungselement dargestellt, dessen Kopf 33 sich aus einem zylindrischen Bereich 36 und einer den zylindrischen Bereich 36 radial überragenden, flanschartigen Erweiterung 34 zusammensetzt. Der Durchmesser des zylindrischen Bereiches entspricht dem grössten Durchmesser des zweiten Abschnittes 32. Der Durchmesser der flanschartigen Erweiterung 34 entspricht dem 1,4- bis 3,3-fachen Durchmesser des zylindrischen Bereiches 36.

## Patentansprüche

1. Nagelförmiges Befestigungselement mit einem Schaft, der an einem ersten Ende mit einem, den Schaft radial überragenden Kopf (3, 13, 23, 33) versehen ist und sich an einem zweiten freien Ende zu einer Spitze (5, 15, 25, 35) verjüngt, wobei der Schaft ausgehend von der Spitze (5, 15, 25, 35) einen balligen, ersten Abschnitt (1, 11, 21, 31) aufweist, an den sich ein konischer, zweiter Abschnitt (2, 12, 22, 32) anschliesst, wobei die Länge (L2, L12, L22, L32) des zweiten Abschnittes (2, 12, 22, 32) kleiner ist als die Länge (L1, L11, L21, L31) des ersten Abschnittes (1, 11, 21, 31), **dadurch gekennzeichnet, dass** sich der konische zweite Abschnitt (2, 12, 22, 32) zum ersten Abschnitt (1, 11, 21, 31) hin verjüngt und sich vom ersten Abschnitt (1, 11, 21, 31) bis zum Kopf (3, 13, 23, 33) erstreckt.

2. Befestigungselement nach Anspruch 1, **dadurch gekennzeichnet, dass** die Länge (L2, L12, L22, L32) des zweiten Abschnittes (2, 12, 22, 32) der 0,16- bis 0,95-fachen Länge (L1, L11, L21, L31) des ersten Abschnittes (1, 11, 21, 31) entspricht.

3. Befestigungselement nach Anspruch 1 oder 2, **dadurch gekennzeichnet, dass** die Länge (L2, L12, L22, L32) des zweiten Abschnittes (2, 12, 22, 32) kleiner ist als die Länge (L3, L13, L23, L33) des Kopfes (3, 13, 23, 33).

4. Befestigungselement nach Anspruch 3, **dadurch gekennzeichnet, dass** die Länge (L2, L12, L22, L32) des zweiten Abschnittes (2, 12, 22, 32) der 0,17- bis 0,95-fachen Länge (L3, L13, L23, L33) des Kopfes (3, 13, 23, 33) entspricht.

5. Befestigungselement nach einem der Ansprüche 1 bis 4, **dadurch gekennzeichnet, dass** der Kopf (3, 13, 23) einen, sich an den zweiten Abschnitt (2, 12, 22) des Schaftes anschliessenden konischen Bereich (6, 16, 26) und eine den konischen Bereich (6, 16, 26) radial überragende, flanschartige Erweiterung (4, 14, 24) aufweist, wobei der Steigungswinkel (W2) des konischen Bereichs (6, 16, 26) grösser ist als der Steigungswinkel (W1) des zweiten Abschnitts (2, 12, 22).

6. Befestigungselement nach einem der Ansprüche 1 bis 4, **dadurch gekennzeichnet, dass** sich der Kopf (33) aus einem sich an den zweiten Abschnitt (32) des Schaftes anschliessenden zylindrischen Bereich (36) und einer den zylindrischen Bereich (36) radial überragenden, flanschartigen Erweiterung (34) zusammensetzt.

7. Befestigungselement nach einem der Ansprüche 1 bis 4, **dadurch gekennzeichnet, dass** der Kopf (13) von einem den zweiten Abschnitt (12) radial überragenden zylindrischen Bereich (14) gebildet ist, dessen Aussenkontur mit einem Gewinde versehen ist.

8. Befestigungselement nach einem der Ansprüche 1 bis 7, **dadurch gekennzeichnet, dass** der zweite Abschnitt (2, 12, 22, 32) einen Steigungswinkel (W1) von 2° bis 3,5° aufweist.

9. Befestigungselement nach einem Der Ansprüche 1 bis 8, **dadurch gekennzeichnet, dass** sich der an den zweiten Abschnitt (2, 12, 22, 32) angrenzende erste Abschnitt (1, 11, 21, 31) unter einem Radius (R) von 20 mm bis 35 mm zur Spitze (5, 15, 25, 35) hin verjüngt.

10. Befestigungselement nach einem der Ansprüche 1 bis 9, **dadurch gekennzeichnet, dass** wenigstens einer der beiden Abschnitte (1, 2, 11, 12, 21, 22, 31, 32) des Schaftes wenigstens teilweise mit einer Oberflächenprofilierung (7) versehen ist.

## Claims

1. Nailshaped Fastener comprising a shaft which is at a first end provided with a head (3, 13, 23, 33) which radially protrudes over the shaft and which narrows at its send free end into a point, and the shaft has commencing from the point (5, 15, 25, 35) a bulky first section (1, 11, 21, 31) to which adjoins a conical second section (2, 12, 22, 32), and the length (L2, L12, L22, L32) of the second section (2, 12, 22, 32) is less than the length (L 1, L11, L21, L31) of the first section (1, 11, 21, 31), **characterised in that** the conical second section narrows towards the first section (1, 11, 21, 31) and extends from the first section (1, 11, 21, 31) up to the head (3, 13, 23, 33).

2. Fastener according to Claim 1, **characterised in that** the length (L2, L12, L22, L32) of the second section (2, 12, 22, 32) corresponds with between 0.16 and 0.95 times the length (L1, L11, L21, L31) of the first section (1, 11, 21, 31).

3. Fastener according to Claim 1 or 2, **characterised in that** the length (L2, L12, L22, L32) of the first section (2, 12, 22, 32) is less than the length (L3, L13, L23, L33) of the head (3, 13, 23, 33).

4. Fastener according to Claim 3, **characterised in that** the length (L2, L12, L22, L32) of the second section (2, 12, 22, 32) corresponds with between 0.17 and 0.95 times the length (L3, L13, L23, L33) of the head (3, 13, 23, 33).

5. Fastener according to one of Claims 1 to 4, **characterised in that** the head (3, 13, 23) comprises a conical area (6, 16, 26) adjacent the second section (2, 12, 22) and a flange like expansion (4, 14, 24) which conically projects over the conical area (6, 16, 26), and the inclination angle (W2) of the conical area (6, 16, 26) is greater than the inclination angle (W1 of the second section (2, 12, 22).

6. Fastener according to one of Claims 1 to 4, **characterised in that** the head (33) is composed of a cylindrical area (36) adjacent the second section (32) of the shaft and a flange like expansion (34) which radially projects over the cylindrical area (36).

7. Fastener according to one of Claims 1 to 4, **characterised in that** the head (13) is formed by a cylindrical area (14) which radially projects over the second section (12), the outside contour of which is provided with a thread.

8. Fastener according to one of Claims 1 to 7, **characterised in that** the second section (2, 12, 22, 32) has an inclination angle (W1) between 2° and 3.5°.

9. Fastener according to one of Claims 1 to 8, **characterised in that** the first section (1, 11, 21, 31) adjacent the second section (2, 12, 22, 32) narrows at a radius between 20 mm and 35 mm towards the point (5, 15, 25, 35).

10. Fastener according to one of Claims 1 to 9, **characterised in that** at least one of the two sections (1, 2, 11, 12, 21, 22, 31, 32) of the shaft is at least partially provided with a surface profile (7).

## Revendications

1. Élément de fixation en forme de clou avec une tige qui est munie, à une première extrémité, d'une tête (3, 13, 23, 33) dépassant radialement de la tige et qui, à une seconde extrémité libre, se rétrécit jusqu'à une pointe (5, 15, 25, 35), la tige comportant, à partir de la pointe (5, 15, 25, 35), une première portion renflée (1, 11, 21, 31) à laquelle se raccorde une seconde portion conique (2, 12, 22, 32), la longueur (L2, L12, L22, L32) de la seconde portion (2, 12, 22, 32) étant inférieure à la longueur (L1, L11, L21, L31) de la première portion (1, 11, 21, 31), **caractérisé en ce que** la seconde portion conique (2, 12, 22, 32) se rétrécit en direction de la première portion (1, 11, 21, 31) et s'étend de la première portion (1, 11, 21, 31) à la tête (3, 13, 23, 33).

2. Élément de fixation selon la revendication 1, **caractérisé en ce que** la longueur (L2, L12, L22, L32) de la seconde portion (2, 12, 22, 32) correspond à 0,16 à 0,95 fois la longueur (L1, L11, L21, L31) de la première portion (1, 11, 21, 31).

3. Élément de fixation selon la revendication 1 ou 2, **caractérisé en ce que** la longueur (L2, L12, L22, L32) de la seconde portion (2, 12, 22, 32) est inférieure à la longueur (L3, L13, L23, L33) de la tête (3, 13, 23, 33).

4. Élément de fixation selon la revendication 3, **caractérisé en ce que** la longueur (L2, L12, L22, L32) de la seconde portion (2, 12, 22, 32) correspond à 0,17 à 0,95 fois la longueur (L3, L13, L23, L33) de la tête (3, 13, 23, 33).

5. Élément de fixation selon une des revendications 1 à 4, **caractérisé en ce que** la tête (3, 13, 23) comporte une zone conique (6, 16, 26) qui se raccorde à la seconde portion (2, 12, 22) de la tige et un élargissement en forme de collerette (4, 14, 24) qui dépasse radialement de la zone conique (6, 16, 26), l'angle d'inclinaison (W2) de la zone conique (6, 16, 26) étant supérieur à l'angle d'inclinaison (W1) de la seconde portion (2, 12, 22).

6. Élément de fixation selon une des revendications 1 à 4, **caractérisé en ce que** la tête (33) se compose d'une zone cylindrique (36) qui se raccorde à la seconde portion (32) de la tige et d'un élargissement en forme de collerette (34) qui dépasse radialement de la zone cylindrique (36).

7. Élément de fixation selon une des revendications 1 à 4, **caractérisé en ce que** la tête (13) est formée par une zone cylindrique (14) qui dépasse radialement de la seconde portion (12) et dont le contour extérieur est pourvu d'un filetage.

8. Élément de fixation selon une des revendications 1 à 7, **caractérisé en ce que** la seconde portion (2, 12, 22, 32) présente un angle d'inclinaison (W1) de 2° à 3,5°.

9. Élément de fixation selon une des revendications 1 à 8, **caractérisé en ce que** la première portion (1, 11, 21, 31) adjacente à la seconde portion (2, 12, 22, 32) se rétrécit en direction de la pointe (5, 15, 25, 35) selon un rayon (R) de 20 mm à 35 mm.

10. Élément de fixation selon une des revendications 1 à 9, **caractérisé en ce qu'**au moins une des deux portions (1, 2, 11, 12, 21, 31, 32) de la tige est pourvue au moins en partie d'un profilage superficiel (7).
